# FASCICULE DE BREVET EUROPEEN

(11) **EP 4 296 159 B1**
(45) Date de publication et mention de la délivrance du brevet: **11.12.2024**
(21) Numéro de dépôt: 23171364.5
(22) Date de dépôt: 03.05.2023
(51) Int. Cl.: B64C 25/52, B64C 25/32

(54) **TRAIN D'ATTERRISSAGE A PATINS ET ROULETTES**
KUFENFAHRGESTELL MIT ROLLEN
SKID LANDING GEAR WITH ROLLERS

(30) Priorité: 24.06.2022 FR 2206284
(43) Date de publication de la demande: 27.12.2023
(73) Titulaire: Airbus Helicopters, 13725 Marignane Cedex (FR)
(72) Inventeur: PRUD'HOMME LACROIX, Pierre, 13127 VITROLLES (FR)
(74) Mandataire: GPI Brevets

(56) Documents cités:
- EP-A1- 2 944 567
- EP-A1- 3 782 907
- EP-B1- 0 512 897
- CN-U- 216 636 810
- JP-A- H10 129 597
- US-A- 2 641 423
- US-B1- 11 230 372

## Description

La présente invention concerne un train d'atterrissage à patins et roulettes, le train d'atterrissage étant destiné à un aéronef tel qu'un aéronef ayant une voilure tournante par exemple. En particulier, l'aéronef peut être un drone susceptible d'atterrir sur le pont d'un navire.

Classiquement, un giravion comporte un atterrisseur sur lequel le giravion repose au sol. Parmi les atterrisseurs, un train d'atterrissage à patins est muni d'un premier patin et d'un deuxième patin destinés à être en contact avec le sol. Le premier patin et le deuxième patin sont écartés transversalement l'un de l'autre, en étant situés de part et d'autre d'un plan longitudinal - vertical de symétrie du train d'atterrissage, voire du giravion.

De plus, le train d'atterrissage à patins est usuellement muni d'une première traverse et d'une deuxième traverse pour relier chaque patin à une structure d'un giravion.

Chaque traverse comprend une première branche connectée au premier patin et à la structure, et une deuxième branche connectée au deuxième patin et à la structure. Chaque traverse peut être discontinue, ou continue en comprenant un tronçon central reliant la première branche à la deuxième branche.

La première traverse peut être qualifiée de «traverse arrière » dans la mesure où cette première traverse est connectée aux parties arrière des premier et deuxième patins. A l'inverse, la deuxième traverse peut être qualifiée de « traverse avant » puisque cette deuxième traverse est connectée aux parties avant des premier et deuxième patins.

Par ailleurs, le premier patin est muni d'une première partie longitudinale d'appui, le deuxième patin étant muni d'une deuxième partie longitudinale d'appui. La première partie longitudinale d'appui et la deuxième partie longitudinale d'appui définissent conjointement un plan de contact du train d'atterrissage sur le sol lorsque l'aéronef est posé sur un sol plat. Un tel plan de contact est dénommé « plan de sustentation » par la suite.

En outre, le train d'atterrissage peut comprendre une première partie avant s'éloignant longitudinalement et en élévation de la première partie longitudinale d'appui. De même, le train d'atterrissage peut comprendre une deuxième partie avant s'éloignant longitudinalement et en élévation de la deuxième partie longitudinale d'appui. Les première et deuxième parties avant peuvent être réalisées dans une même pièce et peuvent présenter les mêmes caractéristiques que les première et deuxième parties longitudinales d'appui respectives. Les première et deuxième parties avant peuvent faire partie d'une traverse avant.

Les documents US 2641423 et FR 2749561 décrivent des trains d'atterrissage à patins.

Le document FR 3 014 079 A1 présente un train d'atterrissage à patins muni d'au moins une traverse à balanciers.

Le document FR 2 995 874 présente un train d'atterrissage à patins muni d'un raidisseur.

Le document EP 2 641 831 présente un patin solidaire de deux branches de traverses oscillantes.

Par ailleurs, un aéronef muni d'un train d'atterrissage à patins peut parfois être soumis à un phénomène de rebond lors d'une phase d'atterrissage. Durant une telle phase d'atterrissage, le train d'atterrissage peut emmagasiner de l'énergie en se déformant. Une partie de l'énergie emmagasinée par le train d'atterrissage peut être restituée lorsque le facteur de charge subi diminue. Il peut en résulter un rebond de l'aéronef.

Selon un autre aspect, les matériaux des organes du train d'atterrissage à patins devant être en contact avec le sol peuvent être choisis afin de présenter des coefficients de frottement relativement faibles. Ainsi, ces organes n'augmentent pas artificiellement les facteurs de charge subis lors d'un atterrissage. Par contre, le train d'atterrissage peut être susceptible de glisser dans certaines conditions extrêmes, sur le pont d'un bateau et en présence de vagues importantes par exemple. L'aéronef peut alors comprendre des systèmes d'ancrage.

Néanmoins, le déplacement manuel d'un aéronef muni d'un train d'atterrissage à patins peut rester délicat au sol en raison des frottements des patins sur ce sol. Des outillages dédiés peuvent être utilisés pour déplacer un aéronef à l'arrêt au sol, tels que des chariots ou des roulettes de manutention par exemple.

Les documents CN 216 636 810 U, JP H10 129597 A, US 11 230 372 B1, US 2641 423 A, et EP 2 944 567 A1 présentent des trains d'atterrissage à patins munis de roues.

La présente invention a alors pour objet de proposer un train d'atterrissage innovant permettant notamment de lutter contre le phénomène de rebond. Un tel train d'atterrissage innovant peut tendre à avoir une stabilité optimisée suite à un atterrissage, et/ou à être plus facilement manipulable par un opérateur au sol comparé à un train d'atterrissage à patins usuel, et/ou à limiter l'usure des patins comparée à l'usure d'un train d'atterrissage à patins usuel, et/ou peut tendre à participer plus efficacement à l'évitement d'un phénomène de résonance sol.

L'invention vise ainsi un train d'atterrissage muni d'un premier patin et d'un deuxième patin.

Le train d'atterrissage comporte au moins deux premières roulettes de contact avec le sol montées sur deux premières roues libres respectives qui sont connectées au premier patin, chaque première roue libre étant configurée pour se bloquer durant une phase de retour élastique lors d'un déplacement du premier patin selon un premier sens et pour être libre durant une phase d'enfoncement lors d'un déplacement selon un deuxième sens opposé au premier sens, le premier sens allant du premier patin vers le deuxième patin, le train d'atterrissage comportant au moins deux deuxièmes roulettes de contact avec le sol montées sur deux deuxièmes roues libres respectives qui sont connectées au deuxième patin, chaque deuxième roue libre étant configurée pour se bloquer durant la phase de retour élastique lors d'un déplacement du deuxième patin selon le deuxième sens et pour être libre durant la phase d'enfoncement lors d'un déplacement du deuxième patin selon le premier sens.

L'expression « de contact avec le sol » signifie que les roulettes associées sont en contact avec le sol lorsque le train d'atterrissage repose sur le sol. Ainsi, un point bas de chaque roulette peut se trouver dans un plan de sustentation défini par des parties longitudinales d'appui des premier et deuxième patins, voire sous ce plan de sustentation en vol.

Les expressions « chaque première roue libre étant configurée pour se bloquer durant une phase de retour élastique lors d'un déplacement du premier patin selon un premier sens et pour être libre durant une phase d'enfoncement lors d'un déplacement selon un deuxième sens opposé au premier sens, le premier sens allant du premier patin vers le deuxième patin, » et « chaque deuxième roue libre étant configurée pour se bloquer durant la phase de retour élastique lors d'un déplacement du deuxième patin selon le deuxième sens et pour être libre durant la phase d'enfoncement lors d'un déplacement du deuxième patin selon le premier sens » signifient que chaque roue libre autorise la rotation propre de la roulette associée sur elle-même selon un unique sens de rotation, et bloque la roulette lorsque cette roulette tend à effectuer une rotation propre selon un sens opposé au dit unique sens de rotation.

Le terme « sur elle-même » fait référence à une rotation propre de la roulette autour de sa roue libre et d'un axe de rotation associé, cet axe de rotation étant un axe central de la roue libre associée. Le terme « rotation » fait par la suite toujours référence à la rotation propre d'une roulette.

L'expression « angle de nutation » désigne par la suite l'angle séparant l'axe de rotation d'une roulette et un plan , ce plan passant par l'axe longitudinal d'extension de la partie longitudinale d'appui correspondante et étant orthogonal au plan de sustentation du train d'atterrissage. Le terme « pivotement » utilisé pour certaines variantes par la suite fait référence à un pivotement de l'ensemble roue libre/ roulette/axe de rotation par rapport au patin correspondant autour d'un axe de pivotement, un pivotement induisant une variation de l'angle de nutation.

Selon une convention et dans la suite de la description, cet angle de nutation peut être compté positivement selon le sens horaire vu de dessus et au sol pour les premières roulettes équipant le premier patin. De façon symétrique, l'angle de nutation pourra être compté positivement selon le sens anti-horaire vu de dessus et au sol pour les deuxièmes roulettes équipant le deuxième patin. Par exemple, le premier patin peut être qualifié de « patin gauche » et le deuxième patin peut être qualifié de « patin droit » aux yeux d'un observateur situé à l'arrière du train d'atterrissage

L'angle de nutation d'une roulette est ainsi considéré nul lorsque son axe de rotation est parallèle à l'axe longitudinal d'extension de la partie longitudinale d'appui correspondante, et égal à 90 degrés lorsque son axe de rotation est dans un plan orthogonal à l'axe longitudinal d'extension de la partie longitudinale d'appui correspondante.

Lors de la première phase d'un atterrissage dite phase enfoncement par commodité, la voie présente entre le premier patin et le deuxième patin tend à s'élargir. Le premier patin et le deuxième patin tendent à s'éloigner l'un de l'autre, les traverses se déformant. Suite à l'impact avec le sol, le premier patin se déplace selon le deuxième sens et le deuxième patin se déplace selon le premier sens. Les roulettes roulent sur le sol en effectuant des rotations propres autour de leurs axes de rotation respectifs, et n'entravent pas les mouvements des patins associés. Les roulettes autorisent la déformation, au moins partiellement élastique, latérale du train d'atterrissage.

Par contre, lors de la deuxième phase d'un atterrissage dite phase de retour élastique, le train d'atterrissage tend à retourner dans sa forme d'équilibre en restituant l'énergie accumulée lors de la déformation précédente du train d'atterrissage. Les roues libres tendent à empêcher de fait les roulettes de tourner sur elles-mêmes. Dès lors, les roulettes, grâce au coefficient de frottement entre les bandages des roulettes et le sol, tendent à freiner le retour élastique des patins ce qui tend à diminuer un rebond voire à empêcher l'apparition d'un rebond. Le retour vers la position d'équilibre du train d'atterrissage peut se faire progressivement, ou un opérateur peut intervenir pour débloquer au moins une roulette par patin, par un débrayage des roues libres ou à l'aide d'un outillage extérieur qui va soulager l'effort vertical exercé sur le train d'atterrissage.

Par ailleurs, selon la réalisation et tel que décrit par la suite, ces roulettes peuvent éventuellement faciliter la manoeuvre du train d'atterrissage au sol et/ou peuvent participer au maintien en position du train d'atterrissage sur un sol glissant et par exemple sur le pont d'un navire.

Le train d'atterrissage peut de plus comporter une ou plusieurs des caractéristiques qui suivent, prises seules ou en combinaison.

Selon une possibilité, le train d'atterrissage peut comprendre une traverse avant munie d'une première branche descendante avant connectée au premier patin et d'une deuxième branche descendante avant connectée au deuxième patin, ledit train d'atterrissage comprenant une traverse arrière munie d'une première branche descendante arrière connectée au premier patin et d'une deuxième branche descendante arrière connectée au deuxième patin. Les traverses peuvent être continues ou discontinues.

Dès lors, lesdites deux premières roulettes peuvent être positionnées respectivement dans l'alignement de la première branche descendante avant et de la première branche descendante arrière, lesdites deux deuxièmes roulettes étant positionnées respectivement dans l'alignement de la deuxième branche descendante avant et de la deuxième branche descendante arrière.

Cet agencement permet de positionner les roulettes au plus près de l'introduction d'efforts dans les traverses qui se déforment lors d'une phase d'atterrissage. Cet agencement permet d'éviter d'introduire des moments de flexion parasites dans les patins. Dans le cas d'un train d'atterrissage du type du brevet FR 2749561, les distributions de moments entre les traverses et les patins ne sont pas modifiées.

Selon une possibilité compatible avec la précédente, lesdites au moins deux premières roulettes peuvent être logées au moins partiellement dans des premiers logements respectifs du premier patin ouverts vers le sol lorsque le train d'atterrissage repose sur le sol, lesdites au moins deux deuxièmes roulettes étant logées au moins partiellement dans des deuxièmes logements respectifs du deuxième patin ouverts vers le sol lorsque le train d'atterrissage repose sur le sol.

Les roulettes sont ainsi en contact avec le sol tout en étant protégées par les patins correspondants.

Selon une possibilité compatible avec les précédentes, chaque roue libre desdites au moins deux premières roues libres et au moins deux deuxièmes roues libres peut comporter une bague intérieure disposée dans une bague extérieure ainsi qu'au moins un organe mobile disposé entre la bague intérieure et la bague extérieure, la bague intérieure ou la bague extérieure d'une roue libre d'un patin correspondant comprenant un bloqueur par organe mobile pour solidariser la bague intérieure et la bague extérieure lorsque le patin correspondant tend à se déplacer vers l'autre patin, une des bague intérieure et bague extérieure étant solidaire de la roulette correspondante et l'autre bague intérieure ou extérieure non solidaire de la roulette étant connectée à une partie longitudinale d'appui du patin correspondant.

Par exemple, la bague extérieure est solidaire de la roulette correspondante et la bague intérieure est connectée à une partie longitudinale d'appui du patin correspondant.

Par exemple, un bloqueur prend la forme d'une face de la bague extérieure apte à coincer l'organe mobile entre la bague extérieure et la bague intérieure pour immobiliser la roulette lorsque le patin correspondant tend à se déplacer vers l'autre patin.

Un organe mobile peut prendre la forme d'une bille, d'un rouleau, d'un cliquet par exemple.

Chaque bague qui n'est pas solidaire d'une roulette est par ailleurs fixe en rotation autour de l'axe de rotation de la roulette associée sur elle-même. Dès lors, cette bague peut être qualifiée de « fixe » et permet de bloquer la roulette associée lorsque le patin correspondant tend à se rapprocher de l'autre patin. L'autre bague peut être qualifiée de « mobile » par opposition.

Selon une possibilité compatible avec les précédentes, lesdites deux premières roulettes peuvent être disposées respectivement autour de deux premières bagues intérieures des deux premières roues libres, les deux premières bagues intérieures étant connectées au premier patin, lesdites deux deuxièmes roulettes étant disposées respectivement autour de deux deuxièmes bagues intérieures des deux deuxièmes roues libres, les deux deuxièmes bagues intérieures étant connectées au deuxième patin.

Selon une possibilité compatible avec les précédentes et une première réalisation, au moins une voire chaque roulette peut avoir angle de nutation fixe.

Ainsi, au moins une première roulette peut présenter un premier axe de rotation sur elle-même fixe par rapport au premier patin.

La première roulette a donc une position sensiblement fixe par rapport au premier patin, au jeu de montage près. Le cas échéant, la bague de la première roue libre qui n'est pas solidaire de la première roulette associée a aussi une position sensiblement fixe par rapport au premier patin. La première roulette a ainsi uniquement un degré de liberté en rotation autour de son premier axe de rotation par rapport au premier patin.

Par exemple, ledit premier axe de rotation peut être parallèle à un premier axe longitudinal d'extension d'une première partie longitudinale d'appui du premier patin. L'angle de nutation est alors nul.

Selon un autre exemple, ledit premier axe de rotation peut présenter un angle différent de 0 et 90 degrés par rapport à un axe géométrique parallèle à ce premier axe longitudinal d'extension, dans une configuration de freinage et par exemple un angle de nutation de l'ordre de 45 degrés selon la convention précédemment décrite.

L'utilisation de premières roulettes ayant des premiers axes de rotation respectifs parallèles au premier axe longitudinal d'extension peut faciliter la déformation du train d'atterrissage sur le sol lors de la phase d'enfoncement.

A l'inverse, l'utilisation de premières roulettes ayant des premiers axes de rotation respectifs décalés angulairement par rapport au premier axe longitudinal d'extension peut faciliter l'immobilisation du train d'atterrissage sur une aire d'atterrissage mobile.

Selon une possibilité compatible avec les précédentes et la première réalisation, lesdites deux premières roulettes peuvent présenter des premiers axes de rotation sur elles-mêmes respectifs parallèles.

Selon une possibilité compatible avec les précédentes et la première réalisation, au moins une deuxième roulette peut présenter un deuxième axe de rotation sur elle-même fixe par rapport au deuxième patin.

La deuxième roulette a donc une position sensiblement fixe par rapport au deuxième patin, au jeu de montage près. Le cas échéant la bague de la deuxième roue libre qui n'est pas solidaire de la deuxième roulette associée a aussi une position sensiblement fixe par rapport au deuxième patin. La deuxième roulette a ainsi uniquement un degré de liberté en rotation autour de son deuxième axe de rotation par rapport au deuxième patin.

Selon une possibilité compatible avec les précédentes et la première réalisation, ledit deuxième axe de rotation peut être parallèle à un deuxième axe longitudinal d'extension d'une deuxième partie longitudinale d'appui du deuxième patin, ou peut présenter un angle différent de 0 et 90 degrés par rapport à un axe géométrique parallèle au deuxième axe longitudinal d'extension, par exemple en ayant un angle de nutation de l'ordre de 45 degrés selon la convention précédemment décrite.

L'utilisation de deuxièmes roulettes ayant des deuxièmes axes de rotation respectifs parallèles au deuxième axe longitudinal d'extension peut faciliter la déformation du train d'atterrissage sur le sol lors de la phase d'enfoncement.

A l'inverse, l'utilisation de deuxièmes roulettes ayant des deuxièmes axes de rotation respectifs décalés angulairement par rapport au deuxième axe longitudinal d'extension peut faciliter l'immobilisation du train d'atterrissage sur une aire d'atterrissage mouvante.

Selon une possibilité compatible avec les précédentes et la première réalisation, lesdites deux deuxièmes roulettes peuvent présenter des deuxièmes axes de rotation sur elles-mêmes respectifs parallèles.

Selon un exemple de la première réalisation, chaque première et deuxième roulette peut avoir un axe de rotation parallèle à l'axe d'extension longitudinal du patin associé. Toutes les roulettes sont sensiblement pivotées à 0 degrés par rapport aux patins correspondants en présentant des angles de nutation nuls au regard des patins

Selon un autre exemple de la première réalisation, ledit premier axe de rotation d'une première roulette peut présenter un angle différent de 0 et 90 degrés par rapport à un axe géométrique parallèle au premier axe longitudinal d'extension et ledit deuxième axe de rotation d'une deuxième roulette peut présenter un angle différent de 0 et 90 degrés par rapport à un axe géométrique parallèle au deuxième axe longitudinal d'extension, le premier axe de rotation n'étant pas parallèle au deuxième axe de rotation. Par exemple, les premiers axes de rotation des premières roulettes du premier patin peuvent être parallèles entre eux, les deuxièmes axes de rotation des deuxièmes roulettes du deuxième patin étant parallèles entre eux sans être parallèles aux premiers axes de rotation. Les premières roulettes peuvent être par exemple inclinées à environ 45 degrés par rapport au premier patin selon une première direction vues de dessus alors que les deuxièmes roulettes peuvent être par exemple inclinées à environ 45 degrés par rapport au deuxième patin selon une deuxième direction vues de dessus.

Selon une possibilité compatible avec les précédentes et un deuxième mode de réalisation, au moins une voire chaque roulette peut avoir angle de nutation variable en ayant la faculté de pivoter par rapport au patin correspondant.

Ainsi, au moins une première roue libre peut être portée par un premier support en liaison pivot avec le premier patin autour d'un premier axe de pivotement présent dans un premier plan transversal orthogonal à un premier axe longitudinal d'extension d'une première partie longitudinale d'appui du premier patin, au moins une deuxième roue libre étant portée par un deuxième support en liaison pivot avec le deuxième patin autour d'un deuxième axe de pivotement présent dans un deuxième plan transversal orthogonal à un deuxième axe longitudinal d'une deuxième partie longitudinale d'appui du deuxième patin. Les axes de pivotement ne sont pas confondus aux axes de rotations respectifs.

Cette architecture permet d'optimiser l'orientation de la roulette concernée par rapport au patin correspondant en fonction du besoin.

Le cas échéant, les bagues des roues libres qui ne sont pas solidaires des roulettes associées sont alors mobiles en pivotement par rapport au patin correspondant.

Eventuellement, le train d'atterrissage peut comporter un moins un actionneur connecté à au moins un des premier support et deuxième support. Ainsi, l'actionneur permet d'orienter au moins une roulette par rapport à l'axe de pivotement correspondant.

Eventuellement, toutes les roues libres peuvent être portées par des supports respectifs mobiles en pivotement par rapport au patin correspondant, chacun étant possiblement associé à au moins un actionneur. Eventuellement, un même actionneur peut agir sur plusieurs supports.

Ainsi, les axes de rotation des roulettes peuvent être pivotés lors d'une phase d'atterrissage, afin de conférer des angles de nutation nuls aux roulettes. Au sol, les axes de rotation des roulettes peuvent être pivotés pour engendrer des angles de nutation sensiblement différents de 0 et 90 degrés par rapport au patin correspondant pour immobiliser le train d'atterrissage, ou de 90 degrés pour permettre de déplacer l'aéronef sur son train d'atterrissage.

Eventuellement, certaines roulettes sont agencées selon le premier mode de réalisation et d'autres roulettes sont agencées selon le deuxième mode de réalisation.

Selon une possibilité compatible avec les précédentes et quelle que soit la réalisation, au moins une desdites roulettes peut comporter un bandage destiné à être en contact avec le sol, ledit bandage étant réalisé dans une matière du groupe des élastomères.

Une telle matière peut augmenter le coefficient de frottement de la roulette sur le sol pour limiter les risques de rebond.

Selon une possibilité compatible avec les précédentes et quelle que soit la réalisation, au moins une des roues libres peut être débrayable.

La roue libre peut alors comprendre un système débrayable manuellement ou motorisé existant pour libérer la roulette associée au sol à l'issue d'une phase d'atterrissage.

Selon une possibilité compatible avec les précédentes et quelle que soit la réalisation, au moins une roue libre peut être munie d'un frein.

L'invention vise par ailleurs un aéronef muni d'un tel train d'atterrissage.

L'invention vise aussi un procédé pour limiter un rebond d'un train d'atterrissage lors d'une phase d'atterrissage avec un tel train d'atterrissage, le train d'atterrissage étant muni d'un premier patin et d'un deuxième patin.

Ce procédé comporte alors lors d'une phase d'atterrissage un positionnement d'au moins deux premières roulettes de contact avec le sol montées sur deux premières roues libres respectives connectées au premier patin dans des positions d'atterrissages interdisant un déplacement des premières roulettes vers le deuxième patin, et un positionnement d'au moins deux deuxièmes roulettes de contact avec le sol montées sur deux deuxièmes roues libres respectives connectées au deuxième patin dans des positions d'atterrissages interdisant un déplacement des deuxièmes roulettes vers le premier patin.

Eventuellement, le procédé peut comporter, lors d'une phase faisant suite à la phase d'atterrissage, un positionnement des au moins deux premières roulettes et des au moins deux deuxièmes roulettes soit dans des positions de roulage respectives autorisant un roulement du train d'atterrissage sur un sol ou soit dans des positions de freinage respectives limitant le glissement du train d'atterrissage sur un sol.

L'invention et ses avantages apparaîtront avec plus de détails dans le cadre de la description qui suit avec des exemples donnés à titre illustratif en référence aux figures annexées qui représentent :
la figure 1, une illustration schématique d'un aéronef ayant un train d'atterrissage selon l'invention,
la figure 2, une vue de côté d'une roulette non pivotante,
la figure 3, une vue en coupe et de coté de la roulette de la figure 2,
la figure 4, une illustration schématique d'un exemple de train d'atterrissage selon l'invention à roulettes non pivotantes,
la figure 5, une illustration schématique d'un exemple de train d'atterrissage selon l'invention à roulettes non pivotantes,
la figure 6, une vue en coupe et de coté d'une roulette pivotante,
la figure 7, une vue partielle montrant la roulette de la figure 6 dans une position orientée pour présenter sensiblement un angle de nutation nul par rapport au patin gauche correspondant, à savoir dans une position d'atterrissage,
la figure 8, une vue partielle montrant la roulette de la figure 6 dans une position orientée sensiblement à 45 degrés par rapport au patin gauche correspondant, à savoir dans une position de freinage,
la figure 9, une vue partielle montrant la roulette de la figure 6 dans une position orientée pour présenter sensiblement un angle de nutation de 90 degrés par rapport au patin gauche correspondant, à savoir dans une position de roulage,
la figure 10, une illustration schématique d'un exemple de train d'atterrissage selon l'invention à roulettes pivotantes, à savoir dans une position d'atterrissage,
la figure 11, une illustration schématique du train d'atterrissage de la figure 10 dans une position de freinage,
la figure 12 une illustration schématique du train d'atterrissage de la figure 10 dans une position de roulage,
la figure 13, un diagramme illustrant un exemple d'accélérations verticales subies par un train d'atterrissage à patins sans roulettes de l'état de l'art lors d'une phase d'atterrissage,
la figure 14, un diagramme illustrant un déplacement d'un point de référence du train d'atterrissage de la figure 11 lors d'une phase d'atterrissage,
la figure 15, un diagramme illustrant un exemple d'accélérations verticales subies par un train d'atterrissage à patins à roulettes selon l'invention lors d'une phase d'atterrissage, et
la figure 16, un diagramme illustrant un déplacement d'un point de référence d'un train d'atterrissage de la figure 13 lors d'une phase d'atterrissage.

Les éléments présents dans plusieurs figures distinctes sont affectés d'une seule et même référence.

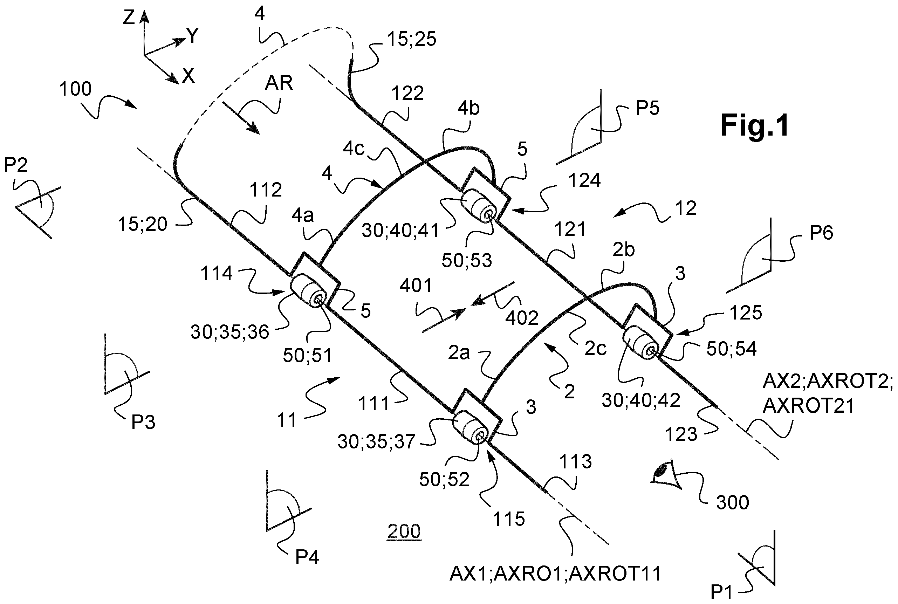

Trois directions X, Y et Z orthogonales les unes par rapport aux autres sont représentées sur les figures 1 à 10.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » et le terme « vertical » sont relatifs à toute direction parallèle à la troisième direction Z.

La figure 1 présente un giravion 100 selon l'invention, tel qu'un hélicoptère par exemple. Ce giravion 100 comporte une structure non représentée qui repose sur un train d'atterrissage 1. Seul le train d'atterrissage est illustré pour ne pas alourdir inutilement la figure.

Ce train d'atterrissage 1 comporte un premier patin 11 et un deuxième patin 12 destinés à être en contact avec le sol lorsque le giravion 100 repose sur un sol 200. Le terme sol désigne une surface sur laquelle un train d'atterrissage peut reposer, et peut couvrir un sol en tant que tel ou encore une aire d'atterrissage d'un véhicule ou d'un immeuble par exemple.

Le premier patin 11 et le deuxième patin 12 sont respectivement disposés transversalement à gauche et à droite d'un plan longitudinal-vertical P1 de symétrie du giravion 100 voire du train d'atterrissage 1. La droite et la gauche sont définies par rapport à un observateur 300 qui regarderait vers l'avant depuis l'arrière du train d'atterrissage 1.

Chaque patin 11,12 est muni d'une partie longitudinale d'appui 111,121. Ainsi, le premier patin 11 est pourvu d'une première partie longitudinale d'appui 111, le deuxième patin 12 étant pourvu d'une deuxième partie longitudinale d'appui 121. Chacune des première partie longitudinale d'appui 111 et deuxième partie longitudinale d'appui 121 s'étend longitudinalement, selon un sens arrière AR d'un axe longitudinal AX1, AX2 propre, d'une extrémité avant 112, 122 à une extrémité arrière 113, 123.

Ainsi, le premier patin 11 comporte une première partie longitudinale d'appui 111 s'étendant longitudinalement le long d'un premier axe longitudinal d'extension AX1. En particulier, la première partie longitudinale d'appui 111 s'étend selon le sens arrière AR d'une extrémité avant dite « première extrémité avant 112 » vers une extrémité arrière dite « première extrémité arrière 113 ». La première partie longitudinale d'appui 111 peut prendre la forme d'un tube creux, par exemple à section circulaire.

De même, le deuxième patin 12 comporte une deuxième partie longitudinale d'appui 121 s'étendant longitudinalement le long d'un deuxième axe longitudinal AX2. En particulier, la deuxième partie longitudinale d'appui 121 s'étend selon le sens arrière AR d'une extrémité avant dite « deuxième extrémité avant 122 » vers une extrémité arrière dite « deuxième extrémité arrière 123 ». La deuxième partie longitudinale d'appui 121 peut prendre la forme d'un tube creux, par exemple à section circulaire.

La deuxième partie longitudinale d'appui 121 et la première partie longitudinale d'appui 111 peuvent être identiques et/ou disposées symétriquement de part et d'autre du plan longitudinal-vertical P1.

Par ailleurs, la première partie longitudinale d'appui 111 et la deuxième partie longitudinale d'appui 121 peuvent définir conjointement un plan de sustentation P2 sur lequel repose le train d'atterrissage 1 sur un sol plat, à savoir sur un sol horizontal dans le référentiel terrestre.

Par ailleurs, chaque patin 11,12 peut comporter un organe dit « portion avant 15 ».

Ainsi, le premier patin 11 comporte une portion avant 15 dite « première portion avant 20 ». La première portion avant 20 s'étend vers l'avant et en élévation à partir de la première partie longitudinale d'appui 111. Dès lors, la première partie longitudinale d'appui 111 est prolongée vers l'avant par la première portion avant 20.

De même, le deuxième patin 12 comporte une portion avant 15 dite « deuxième portion avant 25 ». La deuxième portion avant 25 s'étend vers l'avant et en élévation à partir de la deuxième partie longitudinale d'appui 121. Dès lors, la deuxième partie longitudinale d'appui 121 est prolongée vers l'avant par la deuxième portion avant 25.

Chaque portion avant 15 peut ainsi être en saillie longitudinale vers l'avant de la partie longitudinale d'appui 111,121 correspondante.

Eventuellement, la première portion avant 20 et la deuxième portion avant 25 sont identiques et/ou disposées symétriquement de part et d'autre du plan longitudinal-vertical P1.

Selon une autre caractéristique possible, le premier patin 11 et le deuxième patin 12 peuvent être reliés transversalement à une traverse arrière 2. Par exemple, une première branche descendante arrière 2a et une deuxième branche descendante arrière 2b de cette traverse arrière 2 sont fixées respectivement au premier patin 11 et au deuxième patin 12 par des moyens de fixation 3 usuels. Ces moyens de fixation 3 peuvent comprendre des manchons par exemple.

La traverse arrière 2 peut être continue. Une portion sommitale arrière 2c est alors agencée entre la première branche descendante arrière 2a et la deuxième branche descendante arrière 2b de la traverse arrière 2. La portion sommitale arrière 2c de la traverse arrière 2 peut alors être fixée à la structure du giravion 100 via au moins un moyen de fixation usuel.

Alternativement, la traverse arrière 2 peut être discontinue et alors dépourvue de la portion sommitale arrière 2c. Chaque branche descendante arrière 2a, 2b est alors attachée à la structure via au moins un moyen de fixation usuel.

Le premier patin 11 et le deuxième patin 12 peuvent être reliés transversalement à une traverse avant 4. La traverse avant 4 possède une première branche descendante avant 4a fixée au premier patin 11 par une pièce de jonction 5 usuelle, par exemple de type manchon. De plus, la traverse avant 4 possède une deuxième branche descendante avant 4b fixée au deuxième patin 12 par une pièce de jonction 5 usuelle, par exemple de type manchon.

La traverse avant 4 peut être discontinue ou continue en comprenant une portion sommitale avant 4c agencée entre les première et deuxième branches descendantes avant 4a, 4b voire fixée à la structure du giravion 100 via au moins un moyen de fixation usuel.

Le premier patin 11, le deuxième patin 12, la traverse avant 4 et la traverse arrière 2 peuvent comprendre chacun un unique tube ou plusieurs tubes assemblés les uns aux autres.

Selon un autre aspect, la traverse avant 4 peut être fixée à chaque patin 11,12 sensiblement entre l'extrémité avant de chaque patin 11,12 et la traverse arrière 2, ou peut s'étendre entre les deux portions avant précitées selon l'exemple illustré avec des pointillés.

Par ailleurs, le train d'atterrissage 1 comporte une pluralité de roulettes 30 de contact avec le sol portées par le premier patin 11 et le deuxième patin 12, et en particulier au moins une roulette dite « première roulette 35 » portée par le premier patin 11 et au moins une roulette dite « deuxième roulette 40 » portée par le deuxième patin 12. La référence 30 est utilisée pour désigner n'importe quelle roulette, les références 35, 36, 37, 40, 41,42 désignant des roulettes particulières.

Chaque roulette 30 peut comprendre un bandage 31 formant une bande de roulement. Le bandage 31 peut être réalisé dans une matière du groupe des élastomères pour conférer à la bande de roulement un coefficient de frottement maximisé. Le bandage peut présenter une forme tronconique en tonneau pour localiser correctement l'effort sol et pour limiter les couples résistants en pivotement le cas échéant.

Chaque roulette 30 est mobile en rotation sur elle-même autour d'un axe de rotation.

Selon une autre caractéristique, chaque roulette 30 est montée sur une roue libre 50 connectée à un patin 11, 12. La référence 50 désigne n'importe quelle roue libre, les références 51, 52, 53, 54 désignant des roues libres 50 particulières si besoin. Chaque roue libre 50 est configurée pour autoriser la rotation de la roulette 30 portée selon uniquement un sens de rotation.

Ainsi, le train d'atterrissage 1 comporte au moins deux premières roulettes 36, 37 montées sur deux roues libres dites « premières roues libres 51, 52 » respectives, voire comporte uniquement deux premières roulettes 36, 37. Chaque première roue libre 51, 52 est alors portée par le premier patin 11, voire par sa première partie longitudinale d'appui 111.

Chaque première roue libre 51, 52 est alors configurée pour bloquer durant une phase de retour élastique d'une phase d'atterrissage la première roulette 36, 37 portée lors d'un déplacement du premier patin 11 selon un premier sens 401 allant du premier patin 11 vers le deuxième patin 12 et pour au contraire autoriser une rotation de la première roulette 36, 37 autour de son axe de rotation AXROT1, AXROT11 lors d'un déplacement selon un deuxième sens 402 opposé au premier sens 401. Durant une phase d'enfoncement de la phase d'atterrissage. Durant un atterrissage, la phase de retour élastique fait suite à la phase d'enfoncement.

De même, le train d'atterrissage 1 comporte au moins deux deuxièmes roulettes 41, 42 montées sur deux roues libres dites « deuxièmes roues libres 53, 54 », voire comporte uniquement deux deuxièmes roues libres 53, 54. Chaque deuxième roue libre 53, 54 est alors portée par le deuxième patin 12, voire par sa deuxième partie longitudinale d'appui 121.

Chaque deuxième roue libre 53, 54 est alors configurée pour bloquer durant la phase de retour élastique la deuxième roulette 41, 42 portée lors d'un déplacement du deuxième patin 12 selon le deuxième sens 402 et pour au contraire autoriser une rotation de la deuxième roulette 41, 42 durant la phase d'enfoncement autour de son axe de rotation AXROT2, AXROT21 lors d'un déplacement selon le premier sens 401.

Lors durant la phase d'enfoncement d'une phase d'atterrissage, le premier patin 11 peut tendre à s'écarter du deuxième patin 12 selon le deuxième sens 402, le deuxième patin 12 tendant à s'écarter du premier patin 11 selon le premier sens 401. Les traverses 2, 4 se déforment en emmagasinant de l'énergie, les roulettes 30 roulant sur le sol 200. A l'issue de ce mouvement, durant la phase de retour élastique les roues libres 50 tendent à freiner, voire à empêcher le retour du premier patin 11 et du deuxième patin 12 l'un vers l'autre dans une position d'équilibre en bloquant les roulettes 30.

Eventuellement, les deux premières roulettes 36, 37 sont positionnées respectivement dans l'alignement de la première branche descendante avant 4a et de la première branche descendante arrière 2a, au niveau de leurs jonctions 5, 3 avec le premier patin 11.

Eventuellement, les deux deuxièmes roulettes 41, 42 sont positionnées respectivement dans l'alignement de la deuxième branche descendante avant 4b et de la deuxième branche descendante arrière 2b, au niveau de leurs jonctions 5, 3 avec le deuxième patin 12.

Selon une autre caractéristique, une roulette 30 peut être logée dans un logement d'un patin 11,12, voire de sa partie longitudinale d'appui 111,121.

Dès lors, les deux premières roulettes 36, 37 peuvent être logées au moins partiellement dans deux premiers logements 114, 115 respectifs du premier patin 11. Chaque premier logement 114,115 est ouvert vers le sol 200 lorsque le train d'atterrissage 1 repose sur le sol 200.

Eventuellement, les deux deuxièmes roulettes 41, 42 peuvent être logées au moins partiellement dans deux deuxièmes logements 124, 125 respectifs du deuxième patin 12. Chaque deuxième logement 124,125 est ouvert vers le sol 200 lorsque le train d'atterrissage 1 repose sur le sol 200.

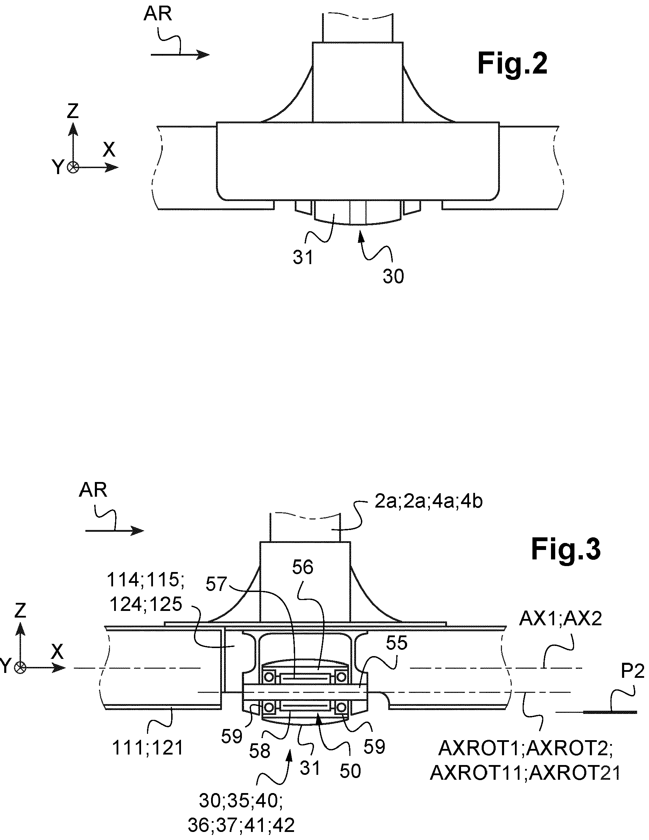

La figure 2 présente une vue d'une roulette 30 portée par un patin 11,12.

La figure 3 présente une vue de côté en coupe de la figure 2 et illustre un exemple d'agencement particulier d'une roulette 30. La roulette 30 peut être une des premières roulettes 36, 37, ou une des deuxièmes roulettes 41, 42.

Quelle que soient la réalisation, la roue libre 50 et la roulette 30, une roue libre 50 peut comprendre une bague intérieure 55 disposée dans une bague extérieure 56.

La bague intérieure 35 s'étend le long de l'axe de rotation AXROT1, AXROT11, AXROT2, AXROT21, de la roulette 36, 37, 41, 42 portée, cet axe de rotation AXROT1, AXROT11, AXROT2, AXROT21, pouvant être un axe de symétrie de la bague intérieure 55.

Une des bagues intérieure 55 et extérieur 56 peut être qualifiée de « bague fixe », à savoir sensiblement immobile par rapport à l'axe de rotation associé, alors que l'autre bague est dite « bague mobile » par opposition. La bague mobile est alors solidaire de la roulette associée, la bague fixe étant connectée au patin correspondant par un support fixe ou pivotant selon la réalisation.

Selon les exemples illustrés, la bague intérieure 55 peut être la bague fixe. En outre, la bague intérieure 55 est attachée au patin 11,12 associé par un support. Par ailleurs, la bague extérieure 56 est alors la bague mobile rendue solidaire de la roulette 30 de manière usuelle.

L'inverse est envisageable, la bague extérieure étant connectée au patin correspondant par un support fixe ou pivotant, la bague intérieure étant solidaire de la roulette associée.

De plus et indépendamment de la nature des bagues mobile et fixe, la roue libre 50 comprend au moins un organe mobile 57 coopérant avec un bloqueur 58. L'organe mobile 57 est disposé entre la bague intérieure 55 et la bague extérieure 56, la bague intérieure 55 ou la bague extérieure 56 comprenant un bloqueur 58 par organe mobile 57. Le bloqueur 58 et l'organe mobile 57 solidarise, en rotation autour de l'axe de rotation associé, la bague intérieure 56 et la bague extérieure 57 lorsque le patin 11,12 correspondant tend à se déplacer vers l'autre patin. La bague intérieure 55 étant fixe, selon les exemples donnés, par rapport à l'axe de rotation associé, la roulette 30 ne peut alors pas effectuer une rotation autour de cet axe de rotation.

Selon l'exemple illustré, un organe mobile 57 prend la forme d'un galet disposé entre deux paliers 59, le bloqueur 58 prenant la forme d'une face interne de la bague extérieure 56 apte à coincer le galet entre elle et la bague intérieure 55 en fonction du sens de déplacement du patin 11,12 associé. Alternativement, tout type de roue libre est envisageable, la roue libre 50 pouvant par exemple être une roue libre à cliquets.

Selon une possibilité, une roue libre 50 peut aussi être débrayable, manuellement ou de manière motorisée. Une telle roue libre 50 peut comprendre un moteur mettant en mouvement la bague intérieure 55, une cage mobile portant les galets... On se référera à la littérature pour avoir des exemples de roues libres débrayables.

Dans ces conditions, les deux premières roulettes 36, 37 sont selon les exemples illustrés disposées respectivement autour de deux premières bagues intérieures 55 des deux premières roues libres 51, 52 de manière à être mobiles en rotation autour de deux axes de rotation AXROT1, AXROT11 respectifs, les deux premières bagues intérieures 55 étant connectées au premier patin 11. Les deux deuxièmes roulettes 41, 42 sont disposées respectivement autour de deux deuxièmes bagues intérieures 55 des deux deuxièmes roues libres 53, 54 de manière à être mobiles en rotation autour de deux axes de rotation AXROT2, AXROT21 respectifs, les deux deuxièmes bagues intérieures 55 étant connectées au deuxième patin 12.

Selon une autre caractéristique et un premier mode de réalisation, la bague fixe d'une roue libre 50, à savoir la bague intérieure 55 selon l'exemple donné, peut être attachée au patin 11, 12 associé par un support fixe par rapport à ce patin 11,12. Par exemple, le support comporte alors une chape en U inversée portant la bague intérieure 55 et attachée à une partie longitudinale d'appui 111,121.

Ainsi, au moins une première roulette 36, 37, voire chaque première roulette 50 peut avoir un premier axe de rotation AXROT1, AXROT11 sur elle-même fixe par rapport au premier patin 11. Au moins une deuxième roulette 41, 42, voire chaque deuxième roulette peut avoir un deuxième axe de rotation AXROT2, AXROT21 sur elle-même fixe par rapport au deuxième patin 12.

Les deux premières roulettes 36, 37 peuvent avoir des premiers axes de rotation AXROT1, AXROT11 sur elles-mêmes respectifs parallèles et/ou les deux deuxièmes roulettes 41, 42 ont des deuxièmes axes de rotation AXROT2, AXROT21 sur elles-mêmes respectifs parallèles.

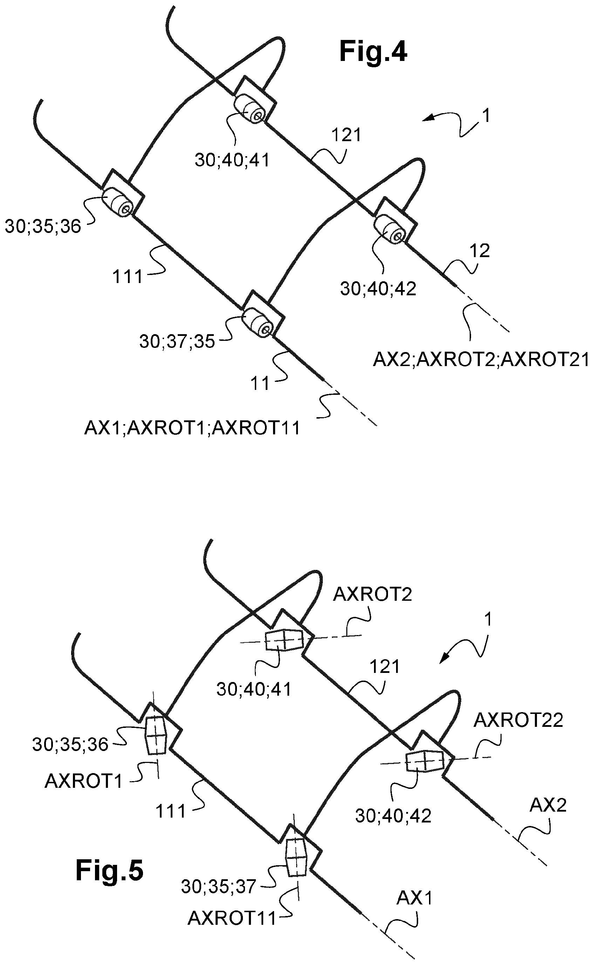

Les figures 4 et 5 illustrent des exemples de train d'atterrissage à roulettes comportant des chapes fixes selon le premier mode de réalisation.

Selon la figure 4, au moins une roulette 50 peut avoir un axe de rotation parallèle à l'axe longitudinal d'extension AX1, AX2 de la partie longitudinale d'appui 111,121 correspondante.

Par exemple, chaque première roulette 36, 37 comporte un premier axe de rotation AXROT1, AXROT11 respectif parallèle au premier axe longitudinal d'extension AX1. Les premières roulettes 36,37 présentent chacune un angle de nutation nul, et par suite une orientation à 0 degré par rapport à l'axe longitudinal d'extension AX1 de la première partie longitudinale d'appui 111, et donc par rapport au premier patin 11.

Par exemple, chaque deuxième roulette 41, 42 comporte un deuxième axe de rotation AXROT2, AXROT21 respectif parallèle au deuxième axe longitudinal d'extension AX2. Les deuxièmes roulettes présentent chacune un angle de nutation nul, et par suite une orientation à 0 degré par rapport à l'axe longitudinal d'extension AX2 de la deuxième partie longitudinale d'appui 121, et donc par rapport au deuxième patin 12.

Selon la figure 5, au moins une roulette 50 peut avoir un axe de rotation qui présente un angle aigu compris entre 0 et 90 degrés, et par exemple de l'ordre de 45 degrés plus ou moins 10%, par rapport à un axe géométrique parallèle à l'axe longitudinal d'extension AX1, AX2 de la partie longitudinale d'appui 111,121 correspondante.

Par exemple, chaque première roulette 36, 37 comporte un premier axe de rotation AXROT1, AXROT11 qui présente un angle de nutation aigu compris entre 0 et 90 degrés non inclus par rapport au premier axe longitudinal d'extension AX1. Les premières roulettes 36,37 présentent par exemple un angle de nutation sensiblement de 45 degrés par rapport au premier patin 11 selon la figure 5 et la convention précédemment décrite.

Par exemple, chaque deuxième roulette 41, 42 comporte un deuxième axe de rotation AXROT2, AXROT21 qui présente un angle de nutation compris entre 0 et 90 degrés non inclus par rapport au deuxième axe longitudinal d'extension AX2. Les deuxièmes roulettes 41,42 présentent par exemple un angle de nutation de 45 degrés par rapport au deuxième patin 12 selon la figure 5 et la convention précédemment décrite.

Eventuellement, aucun premier axe de rotation AXROT1, AXROT11 n'est parallèle, voire orthogonal, à un deuxième axe de rotation AXROT2, AXROT21.

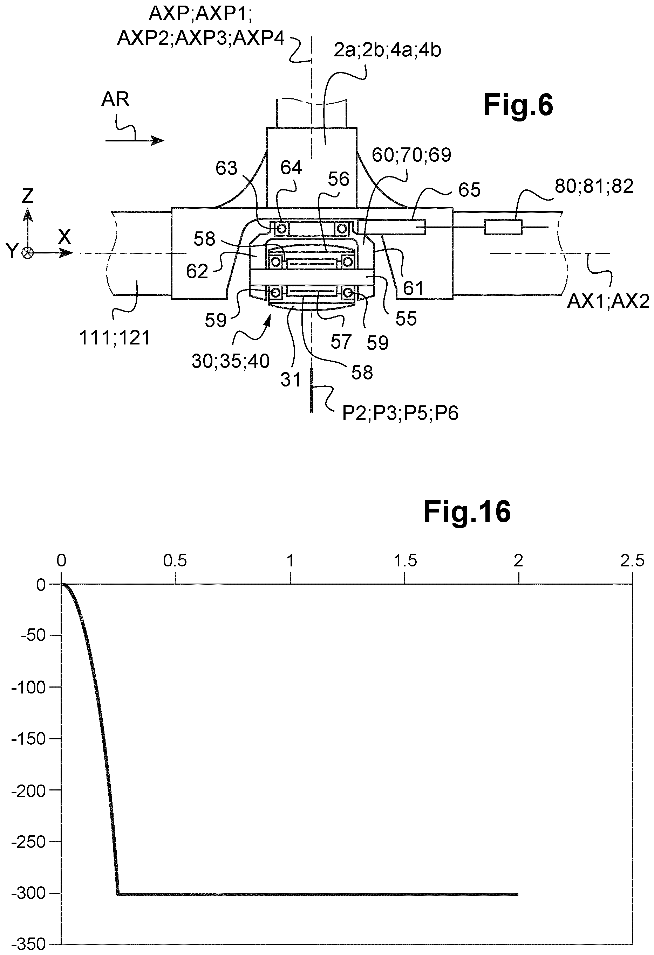

Selon la réalisation de la figure 6 illustrant un deuxième mode de réalisation, la bague fixe d'une roue libre 50, à savoir la bague intérieure 55 selon l'exemple donné, peut être attachée au patin 11,12 associé par un support 60 pivotant par rapport à ce patin 11,12. La figure 6 peut représenter n'importe quelle roue libre 50.

Ainsi, au moins une première roulette 36, 37, voire chaque première roulette 36,37 peut avoir un premier axe de rotation AXROT1, AXROT11 sur elle-même pivotant par rapport au premier patin 11. Au moins une deuxième roulette 41, 42, voire chaque deuxième roulette 41,42 peut avoir un deuxième axe de rotation AXROT2, AXROT21 sur elle-même pivotant par rapport au premier patin 11.

Par exemple, le support 60 d'une roue libre 50 peut comprendre une chape en U inversée munie de deux branches 61, 62 reliées par une paroi 63, les deux branches 61, 62 portant la bague intérieure 55 de la roue libre 50. La paroi 63 est alors en liaison pivot avec le patin 11,12 associé afin de pouvoir pivoter autour d'un axe de pivotement AXP, via un palier 64 par exemple.

De plus, un actionneur 80 peut être articulé d'une part au patin 11,12 ou à une traverse 2,4 et d'autre part au support 60, par exemple à un levier 65 du support 60. L'actionneur 80 peut être un actionneur manuel, hydraulique, électrique ou pneumatique. L'actionneur 80 peut comprendre une commande intégrée, ou peut être lié par une liaison filaire ou non filaire à une commande pour être étendu ou rétracté sur requête. Ainsi, un opérateur peut manoeuvrer la commande pour faire tourner la roulette 50 concernée autour d'un axe de pivotement AXP.

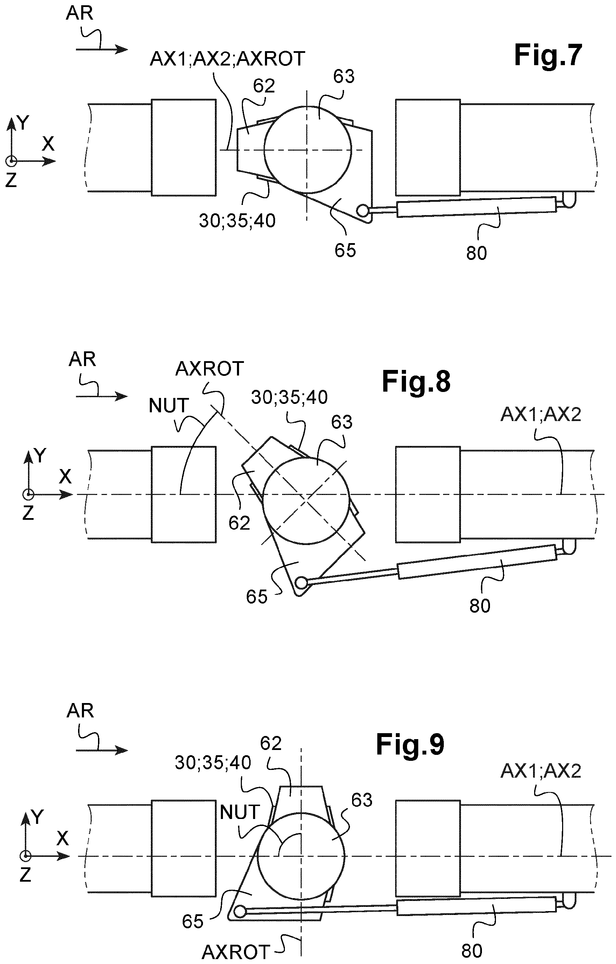

Selon la figure 7, l'actionneur 80 peut agir sur le support 60 pour placer la roulette 30 dans une configuration d'atterrissage, l'angle de nutation de la roulette étant alors nul. L'axe de rotation AXROT de la roue libre 50 est alors dans un plan parallèle à l'axe longitudinal d'extension AX1, AX2 du patin 11,12 associé.

Selon la figure 8, l'actionneur 80 peut agir sur le support 60 pour placer la roulette 30 dans une configuration de freinage telle que décrite précédemment, l'angle de nutation NUT de la roulette étant alors égal à 45 degrés selon l'exemple illustré.

Selon la figure 9, l'actionneur 80 peut agir sur le support 60 pour placer la roulette 30 dans une configuration de roulage. L'angle de nutation NUT de la roulette est alors égal à 90 degrés. L'axe de rotation AXROT de la roue libre 50 est alors perpendiculaire à l'axe longitudinal d'extension AX1, AX2 du patin 11,12 associé.

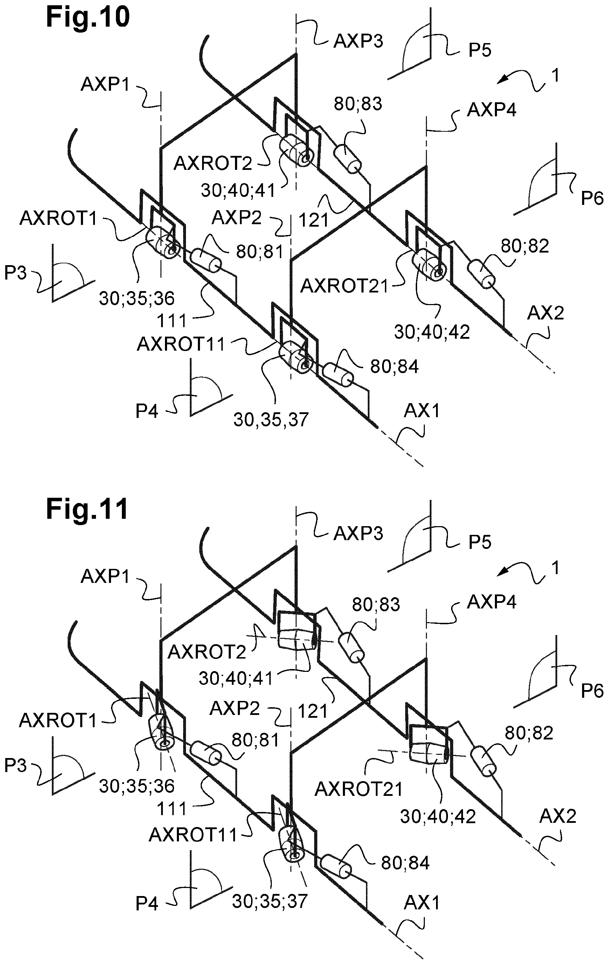

La figure 10 illustre un exemple de train d'atterrissage à roulettes pivotantes selon le deuxième mode de réalisation. Au moins une roulette 50 peut avoir un axe de rotation pivotant par rapport à l'axe longitudinal d'extension AX1, AX2 de la partie longitudinale d'appui 111,121 correspondante.

Par exemple, au moins une première roue libre 50, voire chaque première roue libre 51, 52, est portée par un premier support 69 en liaison pivot avec le premier patin 11 autour d'un premier axe de pivotement AXP1, AXP2, chaque premier axe de pivotement AXP1, AXP2 étant présent dans un premier plan transversal P3, P4 orthogonal au premier axe longitudinal d'extension AX1.

Au moins une deuxième roue libre 50, voire chaque deuxième roue libre 53,54 est portée par un deuxième support 70 en liaison pivot avec le deuxième patin 12 autour d'un deuxième axe de pivotement AXP3, AXP4 présent dans un deuxième plan transversal P5, P6 orthogonal au deuxième axe longitudinal d'extension AX2.

Au moins un premier support 69 peut en outre être connecté à un premier actionneur 81, au moins un deuxième support 70 pouvant être connecté à un deuxième actionneur 82. Chaque support 69,70 peut être connecté à son propre actionneur 80, ou un actionneur 80 peut être relié à plusieurs supports 69,70.

La figure 10 présente le train d'atterrissage dans une position d'atterrissage avec des roulettes ayant des angles de nutation nuls.

La figure 11 présente le train d'atterrissage dans une position de freinage avec des premières roulettes 35 ayant des angles de nutation de 45 degrés par rapport à la première partie longitudinale d'appui 111, et des deuxièmes roulettes 40 ayant des angles de nutation de 45 degrés par rapport à la deuxième partie longitudinale d'appui 121 selon la convention précédemment décrite.

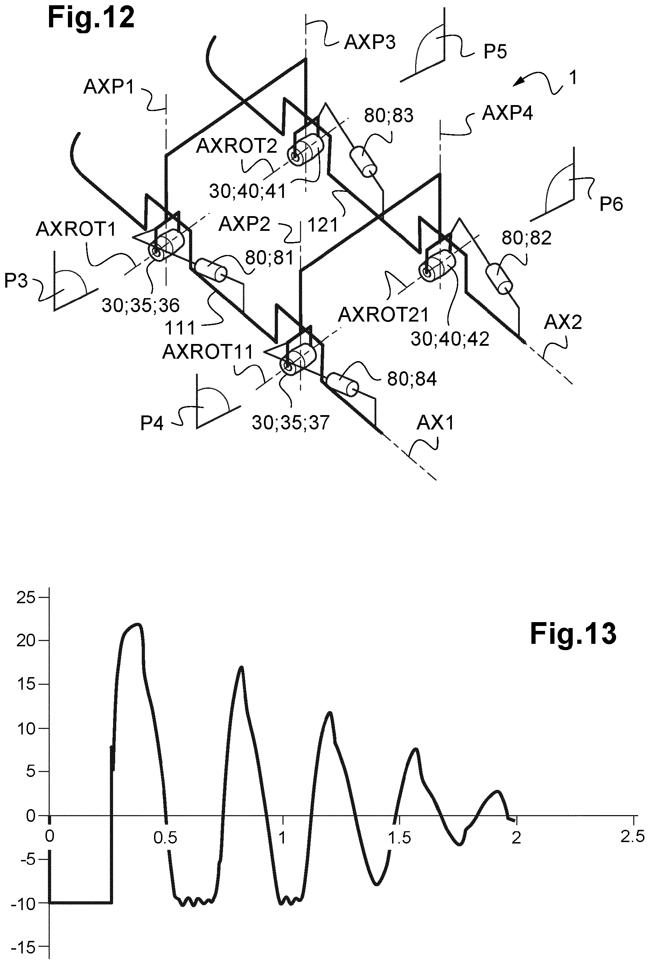

La figure 12 présente le train d'atterrissage dans une position de roulage avec des roulettes ayant des angles de nutation de 90 degrés.

Les figures 13 à 16 illustrent le fonctionnement de l'invention.

La figure 13 présente un diagramme comprenant en abscisse le temps et en ordonnée l'accélération verticale subie par un aéronef muni d'un train d'atterrissage à patins selon l'état de l'art lors d'une phase d'atterrissage.

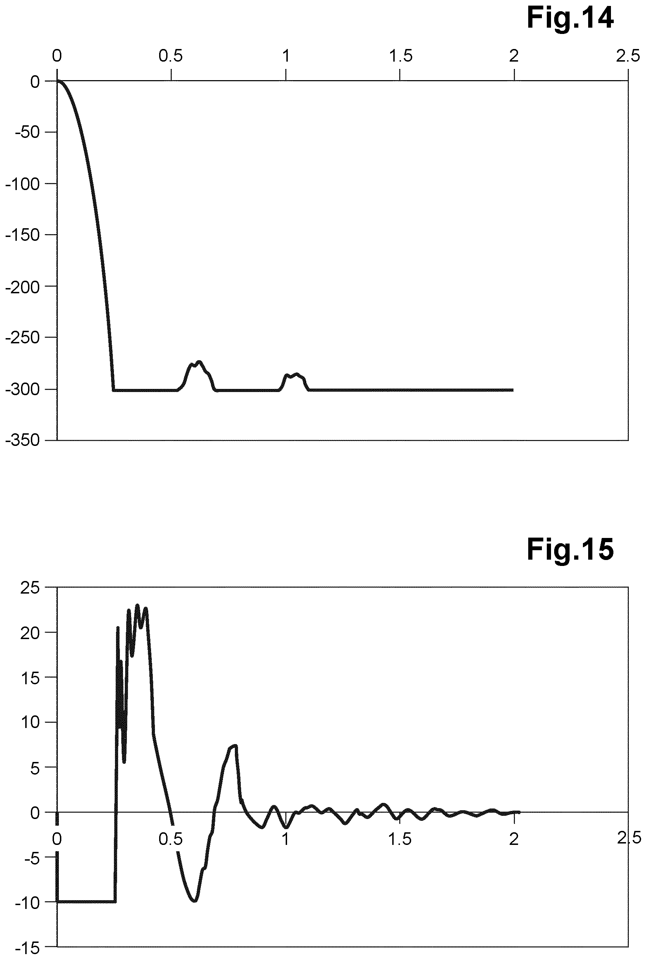

La figure 14 présente un diagramme présentant le déplacement du centre de gravité de l'aéronef lors de cet atterrissage. Le diagramme illustre la présence de deux rebonds après 0.5 seconde et 1 seconde.

Le procédé de l'invention prévoit un positionnement d'au moins deux premières roulettes 36, 37 dans des positions d'atterrissages interdisant un déplacement des premières roulettes 36, 37 vers le deuxième patin 12, et un positionnement d'au moins deux deuxièmes roulettes dans des positions d'atterrissages interdisant un déplacement des deuxièmes roulettes 41, 42 vers le premier patin 11.

La figure 15 présente un diagramme comprenant en abscisse le temps et en ordonnée l'accélération verticale subie par un aéronef équipé d'un train d'atterrissage 1 à patins selon l'invention dans les mêmes conditions que pour la figure 11. La figure 16 présente un diagramme présentant le déplacement du centre de gravité de l'aéronef lors de cet atterrissage. Les roulettes 30 permettent alors d'éviter la création de rebond.

Eventuellement, lors d'une phase faisant suite à la phase d'atterrissage et en présence de roulettes 30 mobiles, le procédé peut prévoir un positionnement des au moins deux premières roulettes 36, 37 et des au moins deux deuxièmes roulettes 41, 42 soit dans des positions de roulage respectives autorisant un déplacement du train d'atterrissage 1 sur un sol 200 par roulement pour atteindre une configuration du type de la figure 9 ou soit dans des positions de freinage respectives interdisant le déplacement latéral et longitudinal du train d'atterrissage 1 sur un sol 200 par roulement par exemple du type de la figure 8.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications

Par exemple, un même train d'atterrissage peut comprendre des roulettes 30 de type différents, par exemple au moins une roulette 30 fixe ayant une inclinaison de 0 degrés par rapport au patin 11,12 associé selon la figure 4, et/ou au moins une roulette 30 fixe ayant une inclinaison de 45 degrés par rapport au patin 11,12 associé selon la figure 5, et/ou au moins une roulette 30 pivotante selon la figure 6.

## Revendications

1. Train d'atterrissage (1) muni d'un premier patin (11) et d'un deuxième patin (12),
le train d'atterrissage (1) comportant au moins deux premières roulettes (36, 37) de contact avec le sol montées sur deux premières roues libres (51, 52) respectives qui sont connectées au premier patin (11), chaque première roue libre (51, 52) étant configurée durant une phase de retour élastique pour se bloquer lors d'un déplacement du premier patin (11) selon un premier sens (401) et pour être libre durant une phase d'enfoncement lors d'un déplacement du premier patin selon un deuxième sens (402) opposé au premier sens (401), le premier sens allant du premier patin (11) vers le deuxième patin (12), le train d'atterrissage (1) comportant au moins deux deuxièmes roulettes (41, 42) de contact avec le sol montées sur deux deuxièmes roues libres (53, 54) respectives qui sont connectées au deuxième patin (12), chaque deuxième roue libre (53, 54) étant configurée pour se bloquer durant la phase de retour élastique lors d'un déplacement du deuxième patin (12) selon le deuxième sens (402) et pour être libre durant la phase d'enfoncement lors d'un déplacement du deuxième patin selon le premier sens (401).

2. Train d'atterrissage selon la revendication 1,
**caractérisé en ce que** ledit train d'atterrissage (1) comprenant une traverse avant (4) munie d'une première branche descendante avant (4a) connectée au premier patin (11) et d'une deuxième branche descendante avant (4b) connectée au deuxième patin (12), ledit train d'atterrissage (1) comprenant une traverse arrière (2) munie d'une première branche descendante arrière (2a) connectée au premier patin (11) et d'une deuxième branche descendante arrière (2b) connectée au deuxième patin (12), lesdites deux premières roulettes (36, 37) sont positionnées respectivement dans l'alignement de la première branche descendante avant (4a) et de la première branche descendante arrière (2a), lesdites deux deuxièmes roulettes (41, 42) étant positionnées respectivement dans l'alignement de la deuxième branche descendante avant (4b) et de la deuxième branche descendante arrière (2b).

3. Train d'atterrissage selon l'une quelconque des revendications 1 à 2,
**caractérisé en ce que** lesdites au moins deux premières roulettes (36, 37) sont logées au moins partiellement dans des premiers logements (114, 115) respectifs du premier patin (11) ouverts vers le sol (200) lorsque le train d'atterrissage (1) repose sur le sol (200), lesdites au moins deux deuxièmes roulettes (41, 42) étant logées au moins partiellement dans des deuxièmes logements (124, 125) respectifs du deuxième patin (12) ouverts vers le sol (200) lorsque le train d'atterrissage (1) repose sur le sol (200).

4. Train d'atterrissage selon l'une quelconque des revendications 1 à 3,
**caractérisé en ce que** chaque roue libre (50) desdites au moins deux premières roues libres (51, 52) et au moins deux deuxièmes roues libres (53, 54) comporte une bague intérieure (55) disposée dans une bague extérieure (56) ainsi qu'au moins un organe mobile (57) disposé entre la bague intérieure (55) et la bague extérieure (56), la bague intérieure (55) ou la bague extérieure (56) d'une roue libre (56) d'un patin (11, 12) correspondant comprenant un bloqueur (58) par organe mobile (57) pour solidariser la bague intérieure (55) et la bague extérieure (56) lorsque le patin (11, 12) correspondant tend à se déplacer vers l'autre patin (12, 11), une des bague intérieure (55) et bague extérieure (56) étant solidaire de la roulette (30) correspondante et l'autre bague intérieure (55) ou extérieure (56) étant connectée à une partie longitudinale d'appui (111, 121) du patin correspondant (11, 12).

5. Train d'atterrissage selon l'une quelconque des revendications 1 à 4,
**caractérisé en ce que** lesdites deux premières roulettes (36, 37) sont disposées respectivement autour de deux premières bagues intérieures des deux premières roues libres (51, 52), les deux premières bagues intérieures étant connectées au premier patin (11), lesdites deux deuxièmes roulettes (41, 42) étant disposées respectivement autour de deux deuxièmes bagues intérieures des deux deuxièmes roues libres (53, 54), les deux deuxièmes bagues intérieures étant connectées au deuxième patin (12).

6. Train d'atterrissage selon l'une quelconque des revendications 1 à 5,
**caractérisé en ce qu'**au moins une première roulette (36, 37) a un premier axe de rotation (AXROT1, AXROT11) sur elle-même fixe par rapport au premier patin (11).

7. Train d'atterrissage selon la revendication 6,
**caractérisé en ce que** ledit premier axe de rotation (AXROT1, AXROT11) est parallèle a un premier axe longitudinal d'extension (AX1) d'une première partie longitudinale d'appui (111) du premier patin (11), ou présente un angle différent de 0 et 90 degrés par rapport à un axe géométrique parallèle à ce premier axe longitudinal d'extension (AX1).

8. Train d'atterrissage selon l'une quelconque des revendications 6 à 7,
**caractérisé en ce que** lesdites deux premières roulettes (36, 37) ont des premiers axes de rotation (AXROT1, AXROT11) sur elles-mêmes respectifs parallèles.

9. Train d'atterrissage selon l'une quelconque des revendications 1 à 8,
**caractérisé en ce qu'**au moins une deuxième roulette (41, 42) a un deuxième axe de rotation (AXROT2, AXROT21) sur elle-même fixe par rapport au deuxième patin (12).

10. Train d'atterrissage selon la revendication 9,
**caractérisé en ce que** ledit deuxième axe de rotation (AXROT2, AXROT21) est parallèle a un deuxième axe longitudinal d'extension (AX2) d'une deuxième partie longitudinale d'appui (121) du deuxième patin (12), ou présente un angle différent de 0 et 90 degrés par rapport à un axe géométrique parallèle à ce deuxième axe longitudinal d'extension (AX2).

11. Train d'atterrissage selon l'une quelconque des revendications 9 à 10,
**caractérisé en ce que** lesdites deux deuxièmes roulettes (41, 42) ont des deuxièmes axes de rotation (AXROT2) sur elles-mêmes respectifs parallèles.

12. Train d'atterrissage selon l'une quelconque des revendications 6 à 8 et l'une quelconque des revendications 9 à 11,
**caractérisé en ce que** ledit premier axe de rotation (AXROT1, AXROT11) présente un angle différent de 0 et 90 degrés par rapport à un axe géométrique parallèle au premier axe longitudinal d'extension (AX1) et ledit deuxième axe de rotation (AXROT2, AXROT21) présente un angle différent de 0 et 90 degrés par rapport à un axe géométrique parallèle au deuxième axe longitudinal d'extension (AX2), ledit premier axe de rotation (AXROT1, AXROT11) n'étant pas parallèle au deuxième axe de rotation (AXROT2, AXROT21).

13. Train d'atterrissage selon l'une quelconque des revendications 1 à 5,
**caractérisé en ce qu'**au moins une première roue libre (35) est portée par un premier support (69) en liaison pivot avec le premier patin (11) autour d'un premier axe de pivotement (AXP1) présent dans un premier plan transversal (P3) orthogonal à un premier axe longitudinal d'extension (AX1) d'une première partie longitudinale d'appui (111) du premier patin (11), au moins une deuxième roue libre (40) étant portée par un deuxième support (70) en liaison pivot avec le deuxième patin (12) autour d'un deuxième axe de pivotement (AXP2) présent dans un deuxième plan transversal (P5) orthogonal à un deuxième axe longitudinal d'extension (AX2) d'une deuxième partie longitudinale d'appui (121) du deuxième patin (12).

14. Train d'atterrissage selon la revendication 13,
**caractérisé en ce que** ledit train d'atterrissage (1) comporte au moins un actionneur (81) connecté à au moins un des premier support (69) et deuxième support (70).

15. Train d'atterrissage selon l'une quelconque des revendications 1 à 14,
**caractérisé en ce qu'**au moins une desdites roulettes comporte un bandage (31) destiné à être en contact avec le sol, ledit bandage (31) étant réalisé dans une matière du groupe des élastomères.

16. Train d'atterrissage selon l'une quelconque des revendications 1 à 15,
**caractérisé en ce qu'**au moins une des roues libres (50) est débrayable.

17. Aéronef (100),
**caractérisé en ce que** ledit aéronef (100) comporte un train d'atterrissage (1) selon l'une quelconque des revendications 1 à 16.

18. Procédé pour limiter un rebond d'un train d'atterrissage (1) lors d'une phase d'atterrissage, le train d'atterrissage (1) étant muni d'un premier patin (11) et d'un deuxième patin (12), le procédé comportant :
- lors d'une phase d'atterrissage un positionnement d'au moins deux premières roulettes (36, 37) de contact avec le sol montées sur deux premières roues libres (51, 52) respectives connectées au premier patin (11) dans des positions d'atterrissages interdisant un déplacement des premières roulettes (36, 37) vers le deuxième patin (12), et un positionnement d'au moins deux deuxièmes roulettes (41, 42) de contact avec le sol montées sur deux deuxièmes roues libres respectives connectées au deuxième patin dans positions d'atterrissages interdisant un déplacement des deuxièmes roulettes (41, 42) vers le premier patin (11),
- lors d'une phase faisant suite à la phase d'atterrissage un positionnement des au moins deux premières roulettes (36, 37) et des au moins deux deuxièmes roulettes (41, 42) soit dans des positions de roulage respectives autorisant un glissement du train d'atterrissage (1) sur un sol (200) ou soit dans des positions de freinage respectives, différentes des positions de roulage, interdisant le glissement du train d'atterrissage (1) sur un sol (200).

## Patentansprüche

1. Fahrwerk (1), das mit einer ersten Kufe (11) und einer zweiten Kufe (12) versehen ist, wobei das Fahrwerk (1) mindestens zwei erste bodenberührende Rollen (36, 37) aufweist, die auf zwei jeweiligen ersten Freiläufen (51, 52) montiert sind, die mit der ersten Kufe (11) verbunden sind, wobei jeder erste Freilauf (51, 52) konfiguriert ist, um während einer Rückfederungsphase bei einer Bewegung der ersten Kufe (11) in einer ersten Richtung (401) zu blockieren und um während einer Eindrückphase bei einer Bewegung der ersten Kufe in einer zweiten Richtung (402), die der ersten Richtung (401) entgegengesetzt ist, frei zu sein, wobei die erste Richtung von der ersten Kufe (11) zur zweiten Kufe (12) verläuft, das Fahrwerk (1) mindestens zwei zweite bodenberührende Rollen (41, 42) umfasst, die auf zwei jeweiligen zweiten Freiläufen (53, 54) montiert sind, die mit der zweiten Kufe (12) verbunden sind, wobei jeder zweite Freilauf (53, 54) konfiguriert ist, um während der Rückfederungsphase bei einer Bewegung der zweiten Kufe (12) in die zweite Richtung (402) zu blockieren und während der Eindrückphase bei einer Bewegung der zweiten Kufe in die erste Richtung (401) frei zu sein.

2. Fahrwerk nach Anspruch 1,
**dadurch gekennzeichnet, dass** das Fahrwerk (1) einen vorderen Querträger (4) umfasst, der mit einem ersten vorderen abwärtsgerichteten Schenkel (4a), der mit der ersten Kufe (11) verbunden ist, und mit einem zweiten vorderen abwärtsgerichteten Schenkel (4b), der mit der zweiten Kufe (12) verbunden ist, versehen ist, dass das Fahrwerk (1) einen hinteren Querträger (2) umfasst, der mit einem ersten hinteren abwärtsgerichteten Schenkel (2a), der mit der ersten Kufe (11) verbunden ist, und mit einem zweiten hinteren abwärtsgerichteten Schenkel (2b), der mit der zweiten Kufe (12) verbunden ist, versehen ist, dass die beiden ersten Rollen (36, 37) jeweils in einer Linie mit dem ersten vorderen abwärtsgerichteten Schenkel (4a) und dem ersten hinteren abwärtsgerichteten Schenkel (2a) positioniert sind, und dass die beiden zweiten Rollen (41, 42) jeweils in einer Linie mit dem zweiten vorderen abwärtsgerichteten Schenkel (4b) und dem zweiten hinteren abwärtsgerichteten Schenkel (2b) positioniert sind.

3. Fahrwerk nach einem der Ansprüche 1 bis 2,
**dadurch gekennzeichnet, dass** die mindestens zwei ersten Rollen (36, 37) mindestens teilweise in jeweiligen ersten Aufnahmen (114, 115) der ersten Kufe (11) untergebracht sind, die zum Boden (200) hin offen sind, wenn das Fahrwerk (1) auf dem Boden (200) ruht, und die mindestens zwei zweiten Rollen (41, 42) mindestens teilweise in jeweiligen zweiten Aufnahmen (124, 125) der zweiten Kufe (12) untergebracht sind, die zum Boden (200) hin offen sind, wenn das Fahrwerk (1) auf dem Boden (200) ruht.

4. Fahrwerk nach einem der Ansprüche 1 bis 3,
**dadurch gekennzeichnet, dass** jeder Freilauf (50) der mindestens zwei ersten Freiläufe (51, 52) und mindestens zwei zweiten Freiläufe (53, 54) einen Innenring (55), der in einem Außenring (56) angeordnet ist, sowie mindestens ein bewegliches Organ (57) aufweist, das zwischen dem Innenring (55) und dem Außenring (56) angeordnet ist, dass der Innenring (55) oder der Außenring (56) eines Freilaufs (56) einer entsprechenden Kufe (11, 12) eine Sperre (58) durch ein bewegliches Organ (57) umfasst, um den Innenring (55) und den Außenring (56) fest miteinander zu verbinden, wenn die entsprechende Kufe (11, 12) dazu neigt, sich zu der anderen Kufe (12, 11) hin zu bewegen, und dass einer von Innenring (55) und Außenring (56) fest mit der entsprechenden Rolle (30) verbunden ist und der andere von Innenring (55) oder Außenring (56) mit einem longitudinalen Stützabschnitt (111, 121) der entsprechenden Kufe (11, 12) verbunden ist.

5. Fahrwerk nach einem der Ansprüche 1 bis 4,
**dadurch gekennzeichnet, dass** die zwei ersten Rollen (36, 37) jeweils um zwei erste Innenringe der zwei ersten Freiläufe (51, 52) herum angeordnet sind, die zwei ersten Innenringe mit der ersten Kufe (11) verbunden sind, die zwei zweiten Rollen (41, 42) jeweils um zwei zweite Innenringe der zwei zweiten Freiläufe (53, 54) herum angeordnet sind, und die zwei zweiten Innenringe mit der zweiten Kufe (12) verbunden sind.

6. Fahrwerk nach einem der Ansprüche 1 bis 5,
**dadurch gekennzeichnet, dass** mindestens eine erste Rolle (36, 37) eine erste Achse (AXROT1, AXROT11 ) der Drehung um sich selbst hat, die in Bezug auf die erste Kufe (11) fest ist.

7. Fahrwerk nach Anspruch 6,
**dadurch gekennzeichnet, dass** die erste Drehachse (AXROT1, AXROT11) parallel zu einer ersten Längsausdehnungsachse (AX1) eines ersten Längsauflageteils (111) der ersten Kufe (11) ist oder einen von 0 und 90 Grad verschiedenen Winkel in Bezug auf eine zu dieser ersten Längsausdehnungsachse (AX1) parallele geometrische Achse aufweist.

8. Fahrwerk nach einem der Ansprüche 6 bis 7,
**dadurch gekennzeichnet, dass** die beiden ersten Rollen (36, 37) jeweils parallele erste Achsen (AXROT1, AXROT11) der Drehung um sich selbst aufweisen.

9. Fahrwerk nach einem der Ansprüche 1 bis 8,
**dadurch gekennzeichnet, dass** mindestens eine zweite Rolle (41, 42) eine zweite Achse (AXROT2, AXROT21) der Drehung um sich selbst hat, die in Bezug auf die zweite Kufe (12) fest ist.

10. Fahrwerk nach Anspruch 9,
**dadurch gekennzeichnet, dass** die zweite Drehachse (AXROT2, AXROT21) parallel zu einer zweiten Längsausdehnungsachse (AX2) eines zweiten Längsauflageteils (121) der zweiten Kufe (12) ist oder einen von 0 und 90 Grad verschiedenen Winkel in Bezug auf eine zu dieser zweiten Längsausdehnungsachse (AX2) parallele geometrische Achse aufweist.

11. Fahrwerk nach einem der Ansprüche 9 bis 10,
**dadurch gekennzeichnet, dass** die beiden zweiten Rollen (41, 42) jeweils parallele zweite Achsen (AXROT2) der Drehung um sich selbst aufweisen.

12. Fahrwerk nach einem der Ansprüche 6 bis 8 und einem der Ansprüche 9 bis 11,
**dadurch gekennzeichnet, dass** die erste Drehachse (AXROT1, AXROT11) einen von 0 und 90 Grad verschiedenen Winkel zu einer zu der ersten Längsausdehnungsachse (AX1) parallelen geometrischen Achse aufweist und die zweite Drehachse (AXROT2, AXROT21) einen von 0 und 90 Grad verschiedenen Winkel in Bezug auf eine zur zweiten Längsausdehnungsachse (AX2) parallele geometrische Achse aufweist, wobei die erste Drehachse (AXROT1, AXROT11) nicht parallel zur zweiten Drehachse (AXROT2, AXROT21) ist.

13. Fahrwerk nach einem der Ansprüche 1 bis 5,
**dadurch gekennzeichnet, dass** mindestens ein erster Freilauf (35) von einem ersten Träger (69) getragen ist, der mit der ersten Kufe (11) um eine erste Schwenkachse (AXP1) schwenkbar verbunden ist, die in einer zu einer ersten Längsausdehnungsachse (AX1) eines ersten Längsauflageteils (111) der ersten Kufe (11) orthogonalen ersten Querebene (P3) liegt, und dass mindestens ein zweiter Freilauf (40) von einem zweiten Träger (70) getragen ist, der mit der zweiten Kufe (12) um eine zweite Schwenkachse (AXP2) schwenkbar verbunden ist, die in einer zu einer zweiten Längsausdehnungsachse (AX2) eines zweiten Längsauflageteils (121) der zweiten Kufe (12) orthogonalen zweiten Querebene (P5) liegt.

14. Fahrwerk nach Anspruch 13,
**dadurch gekennzeichnet, dass** das Fahrwerk (1) mindestens einen Aktuator (81) aufweist, der mit dem ersten Träger (69) und/oder dem zweiten Träger (70) verbunden ist.

15. Fahrwerk nach einem der Ansprüche 1 bis 14,
**dadurch gekennzeichnet, dass** mindestens eine der Rollen eine für Kontakt mit dem Boden vorgesehene Bereifung (31) aufweist, wobei die Bereifung (31) aus einem Material aus der Gruppe der Elastomere hergestellt ist.

16. Fahrwerk nach einem der Ansprüche 1 bis 15,
**dadurch gekennzeichnet, dass** mindestens einer der Freiläufe (50) auskuppelbar ist.

17. Luftfahrzeug (100),
**dadurch gekennzeichnet, dass** das Luftfahrzeug (100) ein Fahrwerk (1) nach einem der Ansprüche 1 bis 16 aufweist.

18. Verfahren zur Begrenzung eines Rückpralls eines Fahrwerks (1) während einer Landephase, wobei das Fahrwerk (1) mit einer ersten Kufe (11) und einer zweiten Kufe (12) versehen ist, wobei das Verfahren umfasst:
- in einer Landephase Positionieren von mindestens zwei ersten bodenberührenden Rollen (36, 37), die auf zwei jeweiligen ersten Freiläufen (51, 52) montiert sind, die mit der ersten Kufe (11) verbunden sind, in Landepositionen, die eine Bewegung der ersten Rollen (36, 37) in Richtung zur zweiten Kufe (12) hin sperren, und Positionieren von mindestens zwei zweiten bodenberührenden Rollen (41, 42), die auf zwei jeweiligen zweiten Freiläufen montiert sind, die mit der zweiten Kufe verbunden sind, in Landepositionen, die eine Bewegung der zweiten Rollen (41, 42) in Richtung zur ersten Kufe (11) hin sperren,
- in einer Phase, die auf die Landephase folgt, Positionieren der mindestens zwei ersten Rollen (36, 37) und der mindestens zwei zweiten Rollen (41, 42) entweder in jeweiligen Rollpositionen, die ein Gleiten des Fahrwerks (1) auf einem Boden (200) erlauben, oder in jeweiligen Bremspositionen, die von den Rollpositionen verschieden sind und ein Gleiten des Fahrwerks (1) auf einem Boden (200) sperren.

## Claims

1. Landing gear (1) provided with a first skid (11) and a second skid (12),
the landing gear (1) comprising at least two first ground-contact rollers (36, 37) mounted on two respective first free-wheels (51, 52) that are connected to the first skid (11), each first free-wheel (51, 52) being configured to lock during an elastic return phase when the first skid (11) moves in a first direction (401) and to be free during a sink phase when the first skid moves in a second direction (402) opposite to the first direction (401), the first direction extending from the first skid (11) towards the second skid (12), the landing gear (1) comprising at least two second ground-contact rollers (41, 42) mounted on two respective second free-wheels (53, 54) that are connected to the second skid (12), each second free-wheel (53, 54) being configured to lock during the elastic return phase when the second skid (12) moves in the second direction (402) and to be free during the sink phase when the second skid moves in the first direction (401).

2. Landing gear according to claim 1, **characterised in that** said landing gear (1) comprising a front cross-member (4) provided with a first front descending branch (4a) connected to the first skid (11) and a second front descending branch (4b) connected to the second skid (12), said landing gear (1) comprising a rear cross-member (2) provided with a first rear descending branch (2a) connected to the first skid (11) and a second rear descending branch (2b) connected to the second skid (12), said two first rollers (36, 37) are positioned respectively in line with the first front descending branch (4a) and the first rear descending branch (2a), said two second rollers (41, 42) being positioned respectively in line with the second front descending branch (4b) and the second rear descending branch (2b).

3. Landing gear according to any one of claims 1 to 2,
**characterised in that** said at least two first rollers (36, 37) are housed at least partially in respective first housings (114, 115) of the first skid (11) that are open towards the ground (200) when the landing gear (1) is resting on the ground (200), said at least two second rollers (41, 42) being housed at least partially in respective second housings (124, 125) of the second skid (12) that are open towards the ground (200) when the landing gear (1) is resting on the ground (200).

4. Landing gear according to any one of claims 1 to 3,
**characterised in that** each free-wheel (50) of said at least two first free-wheels (51, 52) and at least two second free-wheels (53, 54) comprise an inner ring (55) arranged in an outer ring (56) as well as at least one movable member (57) arranged between the inner ring (55) and the outer ring (56), the inner ring (55) or the outer ring (56) of a free-wheel (56) of a corresponding skid (11, 12) comprising one blocker (58) for each a movable member (57) for securing the inner ring (55) and the outer ring (56) together when the corresponding skid (11, 12) tends to move towards the other skid (12, 11), one of the inner ring (55) and the outer ring (56) being secured to the corresponding roller (30) and the other inner ring (55) or outer ring (56) being connected to a longitudinal bearing part (111, 121) of the corresponding skid (11, 12).

5. Landing gear according to any one of claims 1 to 4,
**characterised in that** the two first rollers (36, 37) are respectively arranged around two first inner rings of the two first free-wheels (51, 52), the two first inner rings being connected to the first skid (11), said two second rollers (41, 42) being respectively arranged around two second inner rings of the two second free-wheels (53, 54), the two second inner rings being connected to the second skid (12).

6. Landing gear according to any one of claims 1 to 5,
**characterised in that** at least one first roller (36, 37) has a first axis of rotation (AXROT1, AXROT11) on itself that is fixed with respect to the first skid (11).

7. Landing gear according to claim 6,
**characterised in that** said first axis of rotation (AXROT1, AXROT11) is parallel to a first longitudinal extension axis (AX1) of a first longitudinal bearing part (111) of the first skid (11), or has an angle different from 0 and 90 degrees with respect to a geometric axis parallel to this first longitudinal extension axis (AX1).

8. Landing gear according to any one of claims 6 to 7,
**characterised in that** said two first rollers (36, 37) have respective first axes of rotation (AXROT1, AXROT11) on themselves that are parallel.

9. Landing gear according to any one of claims 1 to 8,
**characterised in that** at least one second roller (41, 42) has a second axis of rotation (AXROT2, AXROT21) on itself that is fixed with respect to the second skid (12).

10. Landing gear according to claim 9,
**characterised in that** said second axis of rotation (AXROT2, AXROT21) is parallel to a second longitudinal extension axis (AX2) of a second longitudinal bearing part (121) of the second skid (12), or has an angle different from 0 and 90 degrees with respect to a geometric axis parallel to this second longitudinal extension axis (AX2).

11. Landing gear according to any one of claims 9 to 10,
**characterised in that** said two second rollers (41, 42) have respective second axes of rotation (AXROT2) on themselves that are parallel.

12. Landing gear according to any one of claims 6 to 8 and any one of claims 9 to 11, **characterised in that** said first axis of rotation (AXROT1 , AXROT11) has an angle different from 0 and 90 degrees with respect to a geometric axis parallel to the first longitudinal extension axis (AX1) and said second axis of rotation (AXROT2, AXROT21) has an angle different from 0 and 90 degrees with respect to a geometric axis parallel to the second longitudinal extension axis (AX2), said first axis of rotation (AXROT1, AXROT11) not being parallel to the second axis of rotation (AXROT2, AXROT21).

13. Landing gear according to any one of claims 1 to 5,
**characterised in that** at least one first free-wheel (35) is carried by a first support (69) in pivotal connection with the first skid (11) about a first pivot axis (AXP1) situated in a first transverse plane (P3) orthogonal to a first longitudinal extension axis (AX1) of a first longitudinal bearing part (111) of the first skid (11), at least one second free-wheel (40) being carried by a second support (70) in pivotal connection with the second skid (12) about a second pivot axis (AXP2) situated in a second transverse plane (P5) orthogonal to a second longitudinal extension axis (AX2) of a second longitudinal bearing part (121) of the second skid (12).

14. Landing gear according to claim 13,
**characterised in that** said landing gear (1) comprises at least one actuator (81) connected to at least one of the first support (69) and the second support (70).

15. Landing gear according to any one of claims 1 to 14,
**characterised in that** at least one of the rollers comprises a tyre (31) intended to be in contact with the ground, said tyre (31) being made from a material from the group of elastomers.

16. Landing gear according to any one of claims 1 to 15,
**characterised in that** at least one of the free-wheels (50) is releasable.

17. Aircraft (100),
**characterised in that** said aircraft (100) comprises a landing gear (1) according to any one of claims 1 to 16.

18. Method for limiting the bounce of a landing gear (1) during a landing phase, the landing gear (1) being provided with a first skid (11) and a second skid (12), the method comprising:
- during a landing phase, positioning at least two first ground-contact rollers (36, 37) mounted on two respective first free-wheels (51, 52) connected to the first skid (11) in landing positions preventing the first rollers (36, 37) from moving towards the second skid (12), and positioning at least two second ground-contact rollers (41, 42) mounted on two respective second free-wheels connected to the second skid in landing positions preventing the second rollers (41, 42) from moving towards the first skid (11),
- during a phase following the landing phase, positioning the at least two first rollers (36, 37) and the at least two second rollers (41, 42) either in respective rolling positions allowing the landing gear (1) to slide on the ground (200) or in respective braking positions, different from the rolling positions, preventing the landing gear (1) from sliding on the ground (200).
